# EUROPEAN PATENT APPLICATION

(11) **EP 3 473 859 A1**
(43) Date of publication of application: **24.04.2019**
(21) Application number: 18200277.4
(22) Date of filing: 13.10.2018
(51) Int. Cl.: F04D 29/02, F04D 29/26, F04D 29/28

(54) **POLYMERIC COMPRESSOR WHEEL WITH CO-MOLDED BORE INSERT**

(30) Priority: 16.10.2017 US 201715784341
(71) Applicant: Borgwarner Inc., Auburn Hills, Michigan 48326 (US)
(72) Inventor: PALMER-WHITE, Tristram, Bradford, BD5 8BR (GB); SLATER, Simon, Wyke, BD12 9LS (GB); ROGERSON, Andrew, Thornton, Bradford, BD13 3JJ (GB); CARR, Malcolm Philip, Mexborough, S64 0EE (GB)
(74) Representative: Peterreins Schley

(57) **Abstract**

A centrifugal compressor wheel assembly (10) that can be employed in devices such as turbochargers or as a component for mechanisms requiring a compressor wheel assembly (10) that includes a tubular insert (112, 12, 212) with a compressor wheel member (16) connected thereto which engages a shaft (24) and a turbocharger (4) including the compressor wheel assembly (10). The tubular insert (112, 12, 212) has a wall member (119, 19, 219) defining a shaft bore (122, 222, 22, 23) that extends from an inlet end (118, 18, 218, 219) to an opposed outlet end (117, 17, 217). The wall member (119, 19, 219) has an outer circumferential surface (121, 21, 221) and an opposed inner circumferential surface (123, 223, 23). At least one engagement member may be defined on the inner circumferential surface (123, 223, 23). An engagement member may be defined on the outer circumferential surface (121, 21, 221). The tubular insert (112, 12, 212) can be composed of a suitable metal.

## Description

### TECHNICAL FIELD

This disclosure relates to compressor wheels. More particularly, this disclosure pertains to compressor wheels that are composed in part of polymeric materials.

### BACKGROUND

Compressors are used in applications such as turbochargers, superchargers and the like. Such devices typically include a compressor wheel that includes an array of aerodynamically contoured impeller blades that are supported on a central section. The central section, such as a hub section, is mounted on a rotatable drive shaft. In the case of a turbocharger, the rotatable shaft is driven by the turbine wheel. For turbochargers, the hub section generally includes a central axial bore into which the shaft extends and is fastened to the hub. Fastening can take any suitable form, such as the use of a threaded shaft and hub, a keyed hub or, alternately, a nose of the shaft may extend through the hub and be fastened thereto using a nut to tighten the hub against a shoulder or other diametrically enlarged structure rotatable with the shaft. The shaft rotatably drives the centrifugal compressor wheel in a direction such that the contoured blades draw in air axially and discharge that air radially outwardly at an elevated pressure level into a chamber of a compressor housing. The pressurized air is, then, supplied from the chamber to the air intake manifold of an internal combustion engine for admixture and combustion with fuel, all in a well-known manner.

Improvements in compressor technology have resulted in a variety of benefits including, but not limited to, increased compressor efficiencies, flow ranges and rapid transient response by careful design of the compressors, particularly the centrifugal compressor wheels. Polymeric centrifugal compressor wheels have been proposed in order to provide performance increases. In certain applications and configurations, it is believed that polymeric compressor wheels can provide high strength and low rotational inertia components. In certain applications, polymeric compressor wheels can be more readily configured into desired vane and fin shape associated with the blades. Unfortunately, the use of polymeric compounds for use in compressor wheels has been limited by some significant material and structural concerns. Polymeric compounds exhibit creep at compressor operating temperatures. This can compromise operational efficiency and limit the useful life of the associated compressor assembly and components such as the compressor wheel. Heretofore polymeric materials that could be employed in compressor wheels would exhibit structural distortion when employed in typical turbocharger operating conditions.

It is desirable to provide a compressor wheel configuration that can provide the efficiencies of polymeric structures without issues of creep and distortion.

### SUMMARY

A compressor wheel assembly that includes a metal tubular insert, a compressor wheel composed of a polymeric material, the compressor wheel member having an axially extending center portion molded on to the tubular insert and a shaft.

Also disclosed is a turbocharger that includes the compressor wheel assembly described herein.

### BRIEF DESCRIPTION OF THE DRAWINGS

The disclosure is best understood from the following detailed description when read in conjunction with the accompanying drawings. It is emphasized that, according to common practice, the various features of the drawings are not to-scale. On the contrary, the dimensions of the various features are arbitrarily expanded or reduced for clarity.
FIG. 1 is schematic perspective view of an embodiment of a compressor wheel member of the compressor wheel assembly as disclosed herein with the shaft removed for clarity;
FIG. 2 is a cross sectional view of the compressor wheel assembly as disclosed herein taken alone the 2-2 line of Fig. 1;
FIG. 3 is a perspective upper view of a first embodiment of the compressor wheel assembly of Fig. 1;
FIG. 4A is a cross-sectional profile of a first embodiment of the tubular insert of the compressor wheel assembly of Fig. 3;
FIG. 4B is a cross-sectional profile of a second embodiment of the tubular insert of the compressor wheel assembly of Fig. 3;
FIG. 4C is a detail cross sectional view of a junction between an embodiment of a centrifugal compressor wheel member as disclosed herein and an embodiment of a tubular insert as illustrated in Fig. 4A;
FIG. 4D is a detail cross sectional view of a junction between an embodiment of a centrifugal compressor wheel member as disclosed herein and an embodiment of a tubular insert as illustrated in Fig. 4B;
FIG. 5 is a perspective view of the tubular insert of Fig. 3;
FIG. 6 is a cross sectional view of the compressor wheel assembly of Fig. 3 in position in a turbocharger;
FIG. 7 an exploded perspective view of a second embodiment of the compressor wheel assembly as disclosed herein;
FIG. 8 is a lower perspective view of the compressor wheel member of Fig. 3;
FIG. 9 is a perspective view of a third embodiment of the tubular insert member as employed in the compressor wheel assembly of Fig. 5;
FIG. 10 is a detail cross sectional view of an embodiment of the compressor wheel member of Fig. 5 with tubular insert removed for clarity;
FIG. 11 is a perspective view of a fourth embodiment of a tubular insert as disclosed herein;
FIG. 12 is a lower perspective view of an alternate embodiment of the compressor wheel member as disclosed herein;
FIG. 13 is perspective view of a fifth alternate embodiment of a tubular insert as disclosed herein;
FIG. 14 is an alternate perspective view of the embodiment of the tubular insert of Fig. 13;
FIG. 15 is a detail view of a tubular insert and compressor wheel member; and
FIG. 16 is a third alternate embodiment of the compressor wheel member as disclosed herein.

### DETAILED DESCRIPTION

Disclosed is a compressor wheel assembly that is configured to be used in devices such as turbochargers, superchargers and the like as well as a turbocharger, supercharger or the like that incorporates the compressor wheel as described herein. In certain embodiments, the compressor wheel as disclosed herein can provide a sturdy light weight mechanism.

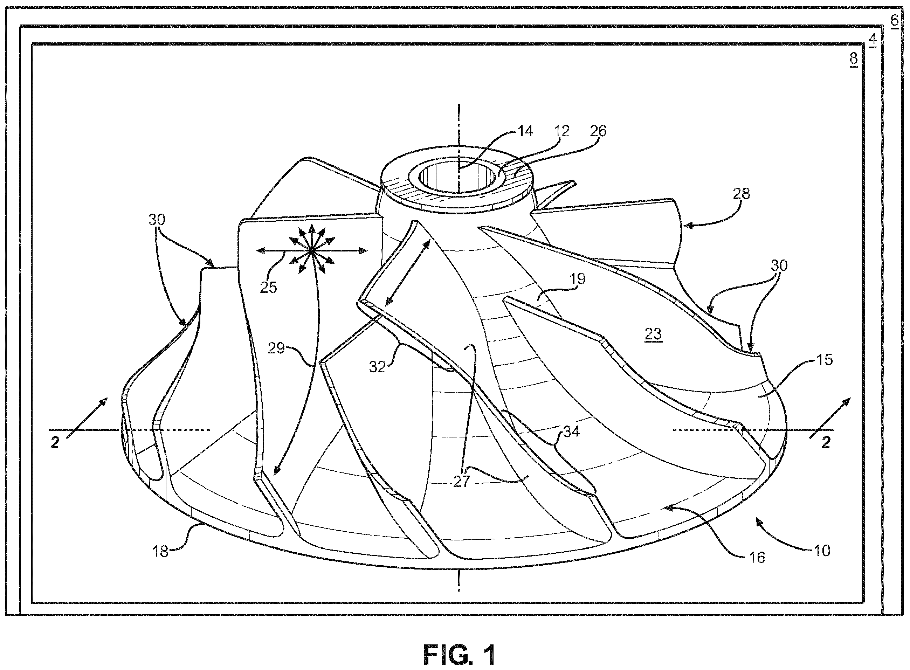

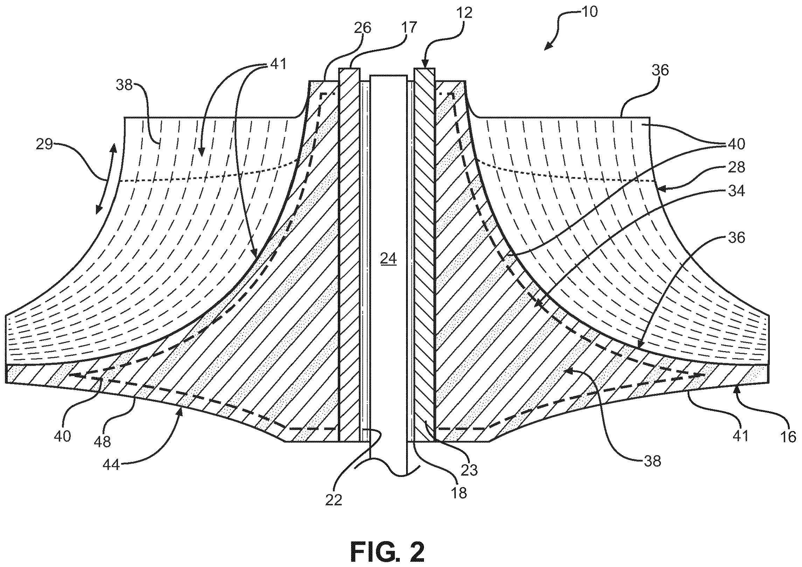

As depicted in Figs 1 and 2, a centrifugal compressor wheel assembly 10 is disclosed herein. The centrifugal compressor wheel assembly 10 can be employed as a centrifugal impeller in a rotatable compressor 8 in many applications. These applications can include rotatable compressors 8 for various exhaust-driven turbochargers 4 or the like in conjunction with various end-use applications such as for internal combustion engines 6. The centrifugal compressor wheel assembly 10 includes a tubular insert 12 that extends along a longitudinal axis 14. In certain embodiments, the tubular insert 12 of the centrifugal compressor wheel assembly 10 can extend axially along the longitudinal axis 14 that extends axially through centrifugal compressor wheel member 16.

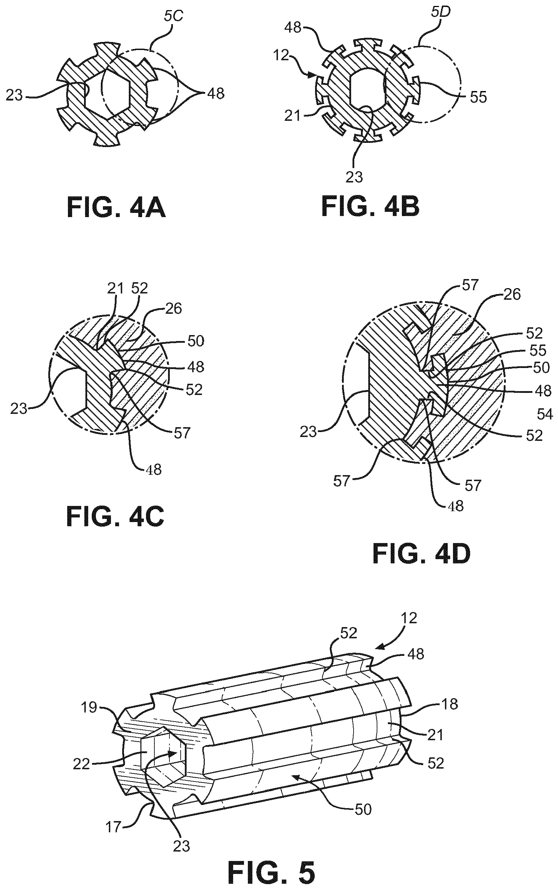

As illustrated in Figs. 5, the tubular insert 12 has an outlet end 17 and an inlet end 18, a wall member 19 that extends between inlet end 18 and outlet end 17, an outer circumferential surface 21 and an inner circumferential surface 23 opposed to the outer circumferential surface 21 to define a shaft bore 22.

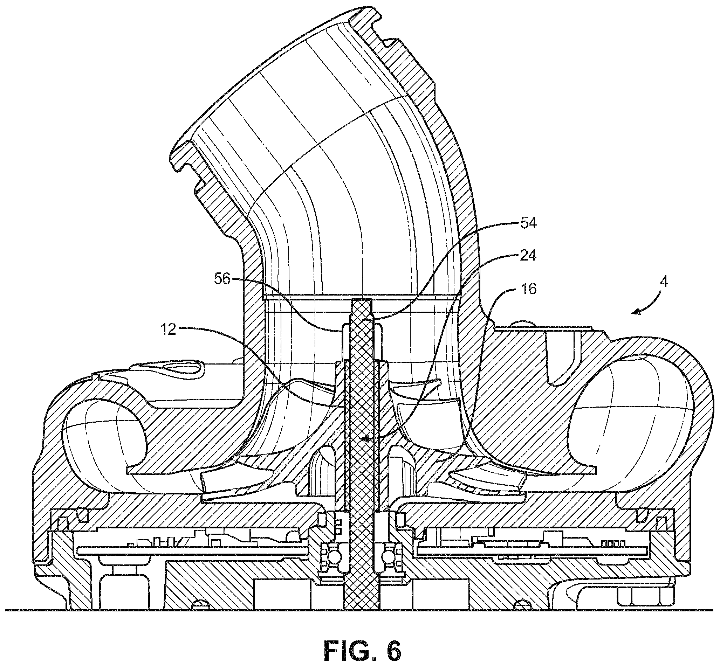

The shaft bore 22 is configured to telescopically receive shaft 24 therein as depicted in Fig. 6. Non-limiting examples of suitable shafts 24 include suitable turbine shafts associated with the suitable turbocharger 4. Shaft 24 is received in shaft bore 22 defined in the tubular insert 12 and extends inward from the inlet end 18. The shaft can extend through the shaft bore 22 to the outlet end 17 and can terminate that that location or can extend to a suitable location short of the outlet end 17 as desired or required. It is also contemplated that, in certain configurations, the shaft 24 can extend or project beyond the outlet end 17, if desired or required. The shaft 24 can be connected to the tubular insert 12 in a suitable manner such as described subsequently.

The centrifugal compressor wheel member 16 of the centrifugal compressor wheel assembly 10 includes an axially extending center portion 26 that is molded on to the tubular insert 12. The centrifugal compressor wheel member 16 of the centrifugal compressor wheel assembly 10 includes a blade array 28 that is contiguously connected to the axially extending center portion 26 and extends radially outward therefrom. The blade array 28 includes a plurality of circumferentially-spaced, radially and axially extending, arcuate centrifugally disposed impeller blades 30. Any suitable number of impeller blades 30 may be utilized in blade array 28 depending on the design requirements of centrifugal compressor wheel member 16 of the centrifugal compressor wheel assembly 10. Impeller blades 30 may have any suitable circumferential spacing(s). Similarly, impeller blades 30 may extend radially and axially to any desired extent and have any suitable shape, particularly of the shape of the blade surfaces 27. The impeller blades 30 comprise airfoils, and the blade surfaces 27 may comprise airfoil surfaces. In certain embodiments, the shape of the impeller blades 30 may be described by a plurality of connected chords that project outwardly from the arcuate outer surface of the axially extending center portion 26 in a chordal direction 25. As used herein, a chord or chordal direction 25 is used to refer to a line segment joining two points of a curve and comprises the width of the impeller blades 30, or in the context of the impeller blades 30 as airfoils, a straight-line segment connecting the leading and trailing edges of an airfoil section. A direction generally transverse to chordal direction 25 may be defined as transchordal direction 29 and generally extends along the length of the impeller blades 30. In certain embodiments, the specific contouring of various impeller blades 30 may include a forward blade rake 32 generally adjacent to the inlet end 18 for at least some of the impeller blades 30, as illustrated in FIG. 1 and at least some backward curvature 34 near the periphery of the impeller blades 30, if desired or required.

The blade array 28 of the centrifugal compressor wheel member 16 of compressor wheel assembly 10 has an outer region 36 and an inner region 38. The blade array 28 of the centrifugal compressor wheel member 16 of the centrifugal compressor wheel assembly 10 can be formed of a suitable polymeric material. The polymeric material employed in the centrifugal compressor wheel member 16 of the centrifugal compressor wheel assembly 10 can be a thermoplastic or thermoset polymeric material suitable for use at elevated temperature and extended duty cycle. Non-limiting examples of such materials include epoxy compounds, phenolic polymers, polyimide polymers, polyamide polymers, polypropylene polymers or polyalkylarylketone polymers including but not limited to polyether ether ketone polymer.

Non-limiting examples of suitable epoxy resin compounds include those cross-linked with themselves as well as polyepoxides reacted with various polyfunctional hardeners to form thermosetting polymers. Suitable materials are formulated from epoxy resin prepolymers or higher molecular weight polymers that contain two or more epoxide groups. Non-limiting examples of suitable epoxy resins include bisphenol A which when reacted with epichlorhydrin yields diglycidyl ethers having the general formula: 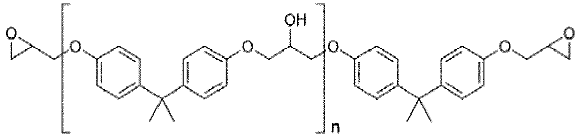 in which n is an integer between 0 and 25. Other epoxy resins that can be employed include materials such as bisphenol F epoxy resin which undergoes epoxidation in a manner similar to bisphenol A as well as epoxy resins such as novolac epoxy resin, aliphatic epoxy resins formed by processes such as the glycidylaton of alipahtic alcohols or polyols to form monofunctional (e.g. dodecanol glycidyl ether), difunctional (butanediol diglycidyl ether), or higher functionality (e.g. trimethylolpropane triglycidyl ether) resins. Still other epoxy resins may include Glycidylamine epoxy resins such as those formed by the reaction of aromatic amines with epichlorhydrin; non-limiting examples of which include -p-aminophenol (functionality 3) and N, N', N", N"'-tetraglycidyl-bis-(4-aminophenyl)-methan (functionality 4).

The epoxy resin material can be cured by homopolymerization or by copolymerization with suitable polyfunctional curatives or hardeners including but not limited to include amines, acids, acid anhydrides, phenols, alcohols and thiols. Hardeners can be ambient or latent hardeners as desired or required.

Phenolic polymers as the term is used herein is defined as polymers based on various reaction products of phenols or substituted phenols with formaldehyde. Such material can be homopolymerized or can be polymerized with suitable co-polymerizable components and can be present as novolac resins or resol resins.

Polyimides suitable for use in the blade array 28 of the compressor wheel as disclosed herein can include materials produced by various methods such as reaction between a suitable dianhydride and a diamine or by reaction of a suitable dianhydride with a diisocyanate and can have the general formula:

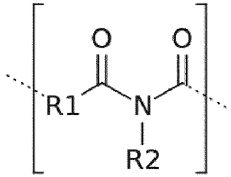

In which R1 can be an aliphatic group, an aromatic group or a mixture of the two. In certain embodiments, non-limiting examples of suitable materials include materials such as polyoxydiphenylene-pyromellitimide, commercially available under the trade designation "KAPTON" and believed to have the formula:

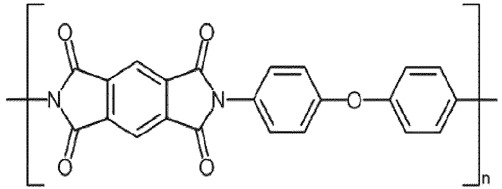

Suitable polyamide materials include aromatic, semi aromatic and aliphatic materials that are homopolymerized or copolymerized with suitable materials to provide or enhance desired properties, including temperature resistance and durability. Non-limiting examples of suitable aliphatic polyamides include Nylon 12, Nylon 11, Nylon 6, Nylon 6,6 and the like. Non-limiting examples of suitable semi-aromatic polyamides include polyphthalamides such as those having the general formula: 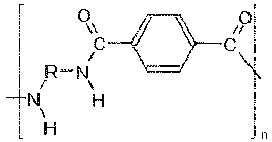 and is defined as such when 55% or more moles of the carboxylic acid portion of the repeating unit in the polymer chain is composed of a combination of terephthalic (TPA) and isophthalic (IPA) acids. Non-limiting examples of suitable polymers include PA 6T/66, PA 6T/DT and PA 6T/6I. It is also contemplated that the semi-aromatic polyamides can be blended or copolymerized with other polymeric materials.

It is also contemplated that suitable polyamide polymers can include materials such as the polyamide 46. Without being bound to any theory, it is believed that polyamide 46 can be a polymeric material having the general formula: 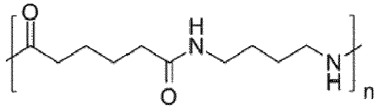 having a density of approximately 1.19 g/ml and a melting point of approximately 290°C in certain applications.

Suitable polyether ether ketones have the general formula: 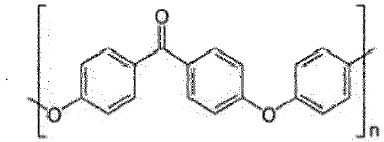 and can have an operating temperature above the operating temperature of the associated centrifugal compressor wheel assembly 10. In certain applications, the polyether ether ketone of choice will have stability at an operating temperature above about 140°C with some grades having useful operating temperatures up to or above 250°C.

Where desired or required, the polymeric material may include a filler material such as a plurality of non-woven, discontinuous fibers as a dispersed reinforcing filler material to reinforce the polymer material. The polymeric material may include other suitable filler materials as an alternate or in addition to fiber reinforcement. Non-limiting examples of such material can include various organic and inorganic particulate filler materials. In certain embodiments, the filler material may comprise various nanoparticle filler materials, including carbon nanoparticles, such as various types of carbon nanotubes. Other non-limiting examples of suitable filler material can include at least one of metal fibers, glass fibers, metal particles, glass particles, carbon particles and the like. Polymer matrix composite material may include polymeric material and filler material in any suitable relative amounts while still providing a mixture that may be formed into the desired shape or shapes present in the blade array of centrifugal compressor wheel assembly 10. Filler material may be dispersed in polymeric material in any suitable manner, including as a homogeneous or heterogeneous dispersion.

Filler material may be formed from any suitable particulate and/or non-woven, discontinuous fiber material, including various metal, glass, polymer or carbon particles and/or fibers. Filler material may have any suitable characteristics including length, cross-sectional shape and cross-sectional size (e.g., fiber diameter for a cylindrical fiber), and may include a mixture of materials such as particles and non-woven fibers, of non-woven, discontinuous fibers having different characteristics and/or particles of differing sizes. The fibers that compose filler material may include individual filaments, tows or untwisted bundles of discontinuous (e.g., chopped) filaments or yarns.

The tubular insert 12 of the centrifugal compressor wheel assembly 10 can be formed of a suitable metal or metal alloy. The metal or metal alloy of choice be a composition capable of supporting the polymeric material of the centrifugal compressor wheel member 16 which may be over-molded on to the tubular insert 12 such that at least a portion of the tubular insert 12 is surrounded by and/or embedded in the polymeric material. Non-limiting examples of suitable metals materials include materials such as aluminum and aluminum alloys, magnesium and magnesium alloys, iron and iron alloys, copper and copper alloys, titanium and titanium alloys, steel and the like. In certain embodiments, the metal alloy can be a bronze or bronze alloys. In certain embodiments, the tubular insert 12 of the centrifugal compressor wheel assembly 10 can comprise at least one of the following: bronze, leaded bronze, copper iron, iron. leaded iron, aluminum, titanium, steel.

Non-limiting examples of bronze material include copper alloyed with suitable alloying metals. In certain embodiments, suitable bronze material is composed of copper is alloyed with between 10% and 14% tin. In certain embodiments, the suitable bronze material can also include zinc in addition to or instead of tin. Other bronze materials that can be employed in certain embodiments include but are not limited to phosphor bronze (0.5-11% tin 0.01 -0.35% phosphorous, copper balance), aluminum bronze (4-11.5% aluminum, 0.5 - 6% iron, 0.8% - 6% nickel, 0.5 - 2% manganese, 0.5% zinc, copper balance), silicon bronze (0-20% zinc, 0.5 to 6% silicon, copper balance).

Suitable stainless steels that can be employed in this disclosure include but are not limited to type 316L. Suitable copper iron alloys can contain copper, iron, and in some instances, beryllium. Non-limiting examples of copper iron alloys include those containing between 65% and 98% copper and between 35% and 2% iron.

The tubular insert 12 of the centrifugal compressor wheel assembly 10 is configured to connect to the centrifugal compressor wheel member 16. In the various embodiments depicted, the tubular insert 12 is in over-molded contact the polymeric material in the centrifugal compressor wheel member 16, and in particular is in contact with polymeric material present in the axially extending center portion 26. The polymeric material can be in over-molded contact with at least the outer circumferential surface 21 of the tubular insert 12. The tubular insert 12 can have one or more components that enhance connection and attachment between the polymeric material in the centrifugal compressor wheel member 16 and the tubular insert 12.

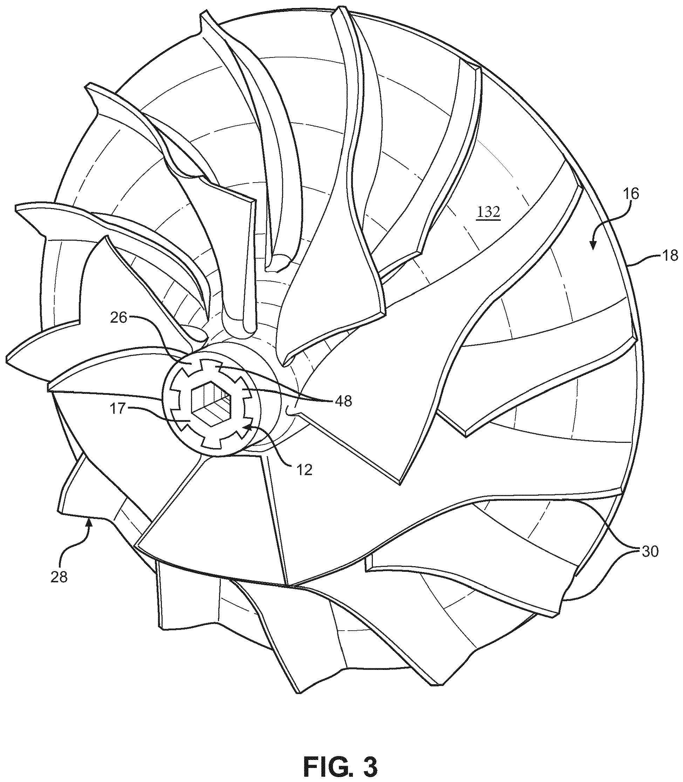

When in position in the compressor wheel member 16, the tubular insert 12 is positioned in the axial central region of the center portion 26 of the centrifugal compressor wheel member 16. In certain embodiments, the tubular insert 12 may have suitable cross sectional profile elements that projects into the polymeric material present in the center portion 26 of the centrifugal compressor wheel member 16 of the centrifugal compressor wheel assembly 10 such that at least the outer circumferential surface 21 of the tubular insert 12 is encased in the associated polymeric material. In certain embodiments, the tubular insert 12 of the centrifugal compressor wheel assembly 10 can include at least one engagement member defined on, contiguously connected to and projecting outward from the outer circumferential surface 21 of the tubular insert 12. As depicted in Figs. 3, 4 and 5, the tubular insert 12 includes at least two protrusions and/or geometric configurations such as engagement ridges 48 that project outward to a location axially distal to the outer circumferential surface 21.

The tubular insert 12 can have any suitable number of engagement ridges 48 axially disposed about the outer circumferential surface 21. The engagement ridges 48 can be positioned around the periphery of the tubular insert 12 to provide rotational stability of the associated centrifugal compressor wheel assembly 10. The number of engagement ridges 48 will be that sufficient to enhance connection between the tubular insert 12 and polymeric material in the center portion 26 of the centrifugal compressor wheel member 16 during multiple duty cycles. The embodiments of the tubular insert 12 depicted in Figs. 4A and 4C have six and eight engagement ridges 48, respectively. It is contemplated that, in certain embodiments, the number of engagement ridges 48 present on the tubular insert 12 between any whole integer between 2 and 20, with numbers between 4 and 12 being used in certain specific embodiments.

In the embodiment depicted in Fig. 5, the at least two engagement ridges 48 extend longitudinally along the outer circumferential surface 21 of the tubular insert 12 from the inlet end 18 to the outlet end 17 and have a substantially uniform cross section throughout their respective lengths. It is considered with in the purview of this disclosure that certain embodiments may include engagement ridges 48 that are positioned spiroid relative to the length of the tubular insert 12. It is also contemplated that one or more engagement ridges 48 can have cross-sectional profiles that vary in cross-sectional area and/or geometric configuration along the longitudinal length of the tubular insert 12.

In certain embodiments, the engagement ridges 48 can extend along the entire length of the tubular insert and can have a suitable defined cross sectional profile. Non-limiting examples include rounded U-shaped profiles, squared profiles and the like. Where desired or required, one or more of the engagement ridges 48 can have a cross sectional profile defining an outer surface 50 that is distal to the outer circumferential surface 21. The outer surface 50 can be planar or arcuate. In certain embodiments, the outer surface 50, when arcuate may have a degree of curvature that is equal to the curvature of the associated outer circumferential surface 21.

The one or more engagement ridges 48 can also each include side walls 52 that extend angularly outward from the associated outer circumferential surface 21 of the tubular insert 12 and terminate at the outer surface 50. The respective side walls 52 are positioned a spaced distance from one another such that the distance from side wall 52 to side wall 52 is less than the width of the associated outer surface 50. In certain embodiments, the side walls 52 can be planar. In the non-limiting embodiment depicted in Fig. 4A and 4C, the side walls 52 flare outward from a minimum proximate to the outer circumferential surface 21 of the tubular insert 12 to terminate in a distance equal to the width of the outer surface 50. In the non-limiting embodiment depicted in Fig. 4B and 4D, the side walls 52 are substantially parallel to one another and terminate to an outwardly protruding planar member 55. Without being bound to any theory, it is believed that the opposed radial inlets 57 defined in the polymeric material by the geometry of the respective engagement ridges 48 creates counter balanced regions of polymeric material concentration and vacuum upon being subjected to axial force that augments the mechanical connection between the tubular insert 12 and the center portion 26 of the centrifugal compressor wheel member 16. One non-limiting illustration of such mechanism is depicted in Figs. 3.

The centrifugal compressor wheel assembly 10 as disclosed herein can also include a suitable shaft 24 such as that depicted in Figs. 2, 6 and 7. The shaft 24 can be composed of any suitable material such as a metal or metal alloy. In certain embodiments, the shaft 24 will have a solid elongated body having a length greater than the associated centrifugal compressor wheel member 16 such that an outlet region 54 of shaft 24 is proud of the respective outlet end 17 of the tubular insert 12. In the use position, it is contemplated that a suitable cap or other anchor device such as sleeve 56 can engage the surface of the outlet region 54 of shaft 24 and the outlet end 17 of the tubular insert 12 such that clamping load is transferred through the tubular insert 12.

The shaft 24 can have any suitable cross sectional configuration. In certain embodiments, it is contemplated that at least a portion of the shaft 24 located in the region corresponding to the tubular insert the can have a non-circular cross-sectional profile that corresponds to the cross-sectional profile of shaft bore 23 of tubular insert 12. Non-limiting examples of suitable cross-sectional profiles include hexagonal and flattened ellipsoid as illustrated in Fig. 4A and 4B respectively.

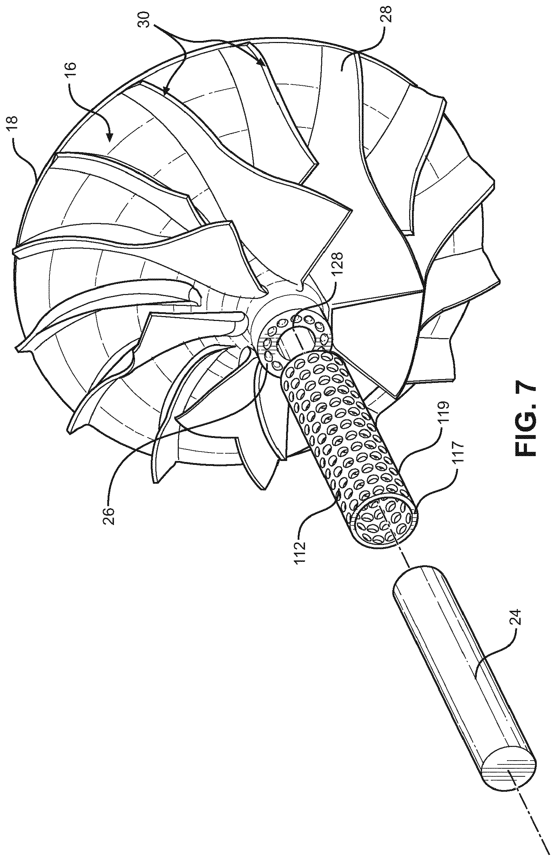

An alternate embodiment of the centrifugal compressor wheel assembly 10 as disclosed herein is depicted in Fig. 7 and includes compressor wheel member 16 as generally described previously that is connected to tubular insert 112 such that polymeric material present in the center portion 26 of centrifugal compressor wheel member 16 is in more complete over-molded contact with tubular insert 112. Tubular insert 112 is configured to receive shaft 24 to produce a centrifugal compressor wheel assembly 10.

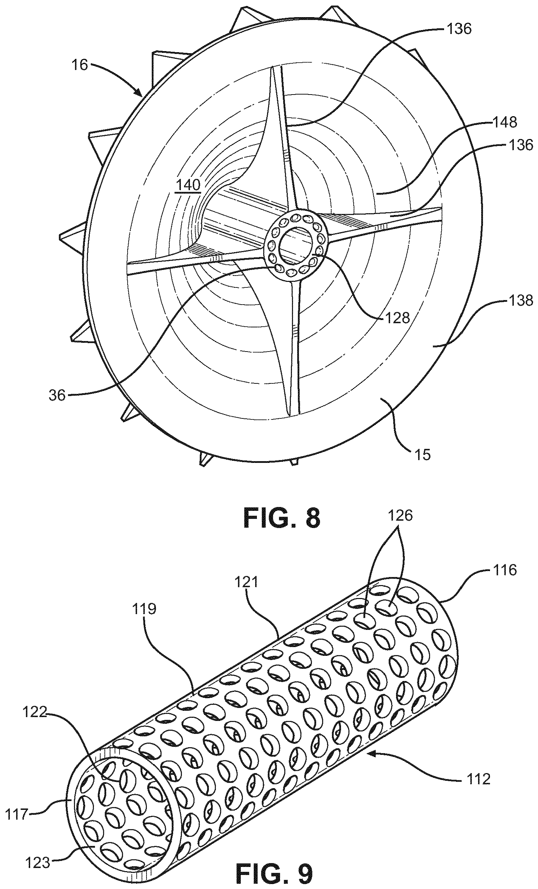

Tubular insert 112 as depicted in Figs 7 and 9 includes at least one connection and enhancement element that promotes the enhanced connection and attachment between the polymeric material in the centrifugal compressor wheel member 16 and the tubular insert 112. The tubular insert 112 has an outlet end 117 and an inlet end 118, a wall member 119, an outer circumferential surface 121 and inner circumferential surface 123 opposed to the outer circumferential surface 121 to define a shaft bore 122.

The tubular insert 112 is configured with a plurality of apertures 126 that extend through the wall member 119 and communicate with the shaft bore 122. In the embodiment depicted in Figs. 7-11, polymeric material is over-molded with the tubular insert 112 such that polymeric material in the center portion 26 of the centrifugal compressor wheel member 16 extends through the apertures and forms an interior polymeric sleeve region 128 that is contiguously joined to the center portion 26 through polymeric material present in each of the plurality of apertures 126. Interior polymeric sleeve 128 defines interior bore 130 in which shaft 24 is telescopically positioned. In such configurations, it is contemplated that the shaft 24 can be positioned in spaced relation to the interior polymeric sleeve 128. It is contemplated that such off set positioning can be maintained by suitable clamping mechanisms associated with the compressor 8 such as a turbocharger. It is contemplated that the clamping mechanisms will engage the tubular insert 112 such that clamping load is transferred there through.

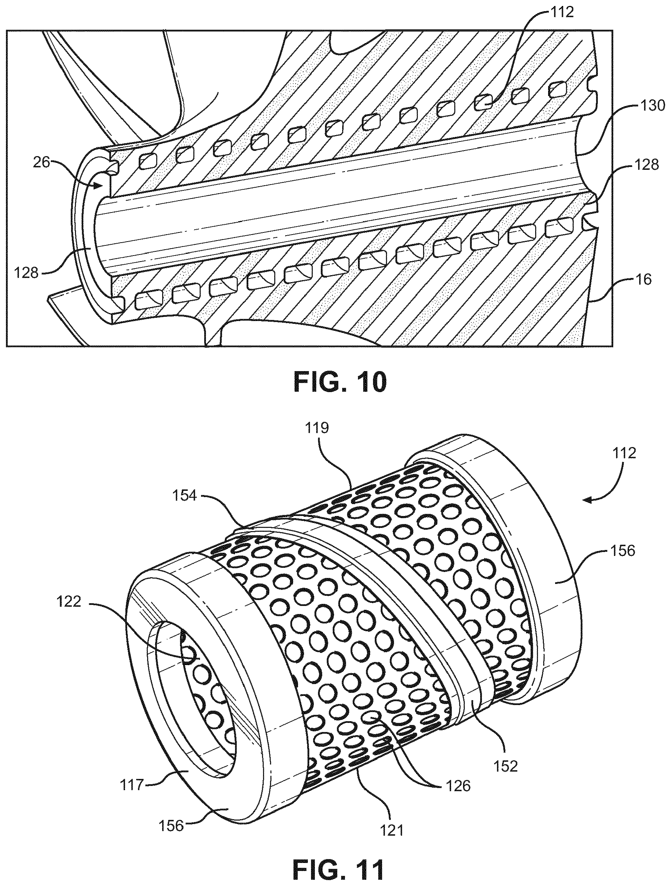

Where desired or required, the tubular insert 112 can also include outer adhesion members connected to and projecting from the outer circumferential surface 121 of wall member 119. In the embodiment depicted in Fig. 11, the tubular insert 112 includes at least one elongated ribbon 152 that projects from the outer circumferential surface 121. As depicted the elongated ribbon is wrapped in a spiral around the tubular insert 112. In certain embodiments, the spiral orientation will be counter to the intended rotation of the associated device. The elongated ribbon can have various surface features to enhance connection between the elongated ribbon 152 and overlying polymeric material including but not limited to ridges 154.

The tubular insert 112 may also include at least one end cap such as end caps 156, 158. End caps 156 and 158 are attached to the respective ends of the wall member 119 and can define an interior offset sufficient to maintain the shaft 24 a spaced distance from interior polymeric sleeve when the tubular insert 112 is in position in the body 15 and the centrifugal compressor wheel assembly 10 is on the use position.

The centrifugal compressor wheel member 16 can have any suitable configuration. In certain embodiments, the centrifugal compressor wheel member 16 includes a body 15 that can have one of more molded crevices 132 defined in the lower face of the centrifugal compressor wheel member 16 opposed to blade array 28 located axially around the center portion 26.

An alternate mold crevice configuration is depicted in Fig. 8 in which veins 136 project perpendicularly outward from center portion 26 to outer walls 138 defining crevices 140.

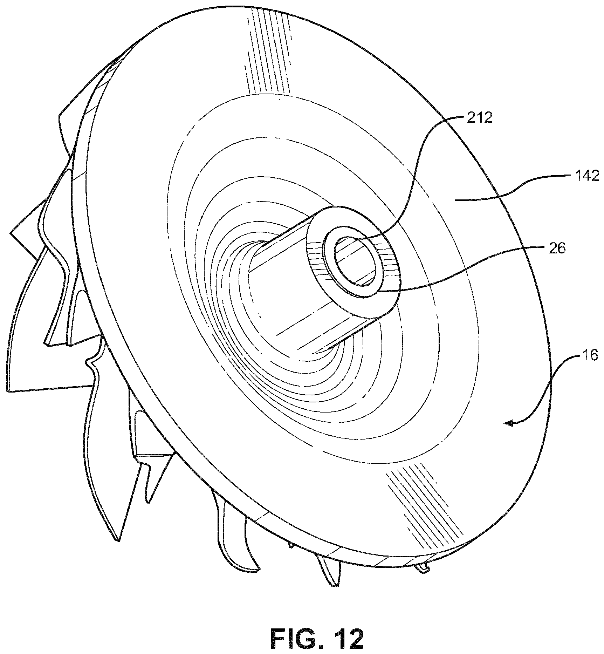

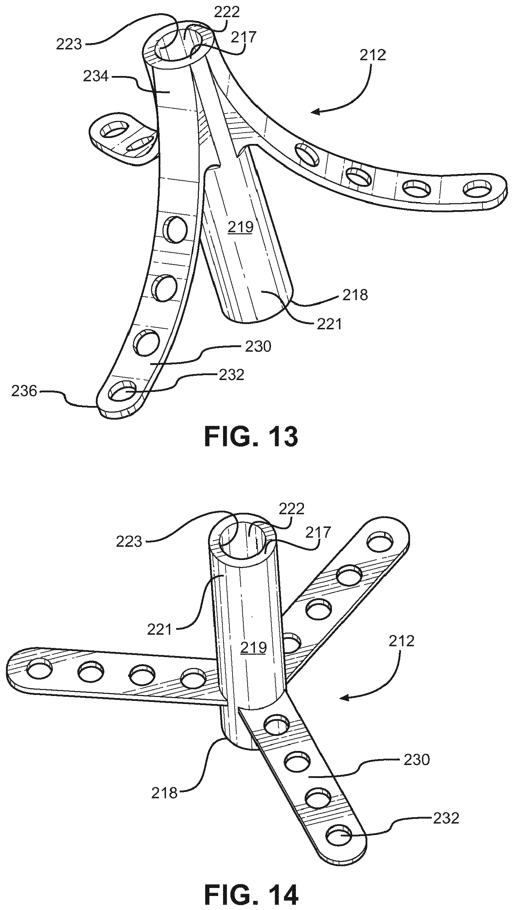

It is also contemplated that in certain embodiments, the centrifugal compressor wheel member 16 of centrifugal compressor wheel assembly 10 can be configured with a unitary crevice 142 extending around the center portion 26 that project outer at the centrally located position such as is depicted in Figs. 12. Where desired or required, the centrifugal compressor wheel member 16 such as one having a unitary crevice 142 can be configured with tubular insert 212 as depicted in Figs. 13. The tubular insert 212 has an outlet end 217 and an inlet end 218, a wall member 219, an outer circumferential surface 221 and an inner circumferential surface 223 opposed to the outer circumferential surface 221 to define a shaft bore 222. The shaft bore 222 is configured to telescopically receive a shaft such as shaft 24 therein.

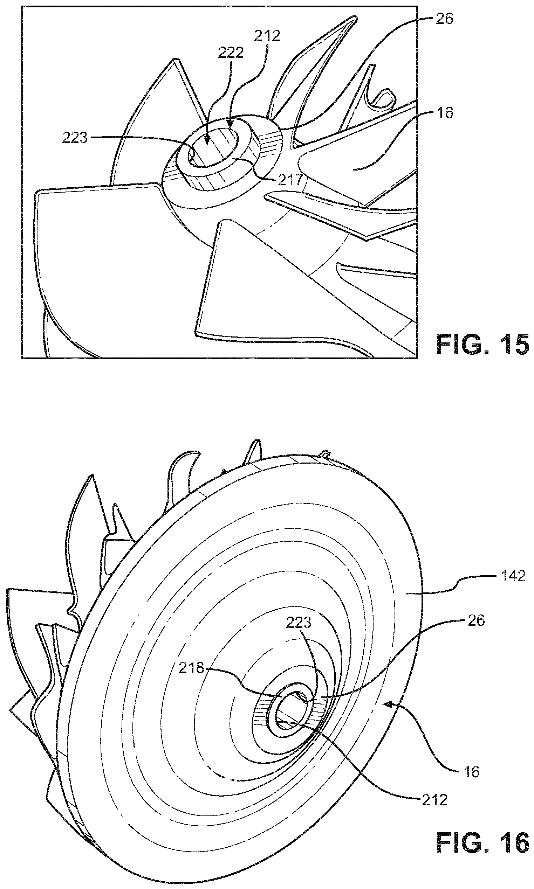

Tubular insert 212 is configured with a plurality of outwardly projecting arms 230 that are configured to be embedded in the centrifugal compressor wheel member 16. The outwardly projecting arms 230 can be configured with a plurality of apertures 232 to receive polymeric material therein. It is contemplated that polymeric material that composes the body 15 of the cylindrical shaft member 16 will surround the wall member 219 and the associated outwardly projecting arms 230 such that the tubular insert 212 is at least partially embedded within the polymeric material such that the outwardly projecting arms 230 and at least a portion of the wall member are surrounded by polymeric material. Polymeric material also fills apertures 232 such that the polymeric material in the apertures 232 is contiguously joined to the adjacent polymeric material surrounding the tubular insert 212. In certain embodiments, at least one of the outlet end 217 and/or the inlet end 219 project a distance beyond the outer surface of the polymeric material. In Fig. 15, outlet end 217 projects beyond the polymeric material to provide a contact or clamping region. In Fig 16, inlet end 218 projects a distance beyond polymeric material to define a contact or clamping region.

The outwardly projecting arms 230 have a wall member 219 contacting end 234 and an outer end 236 opposed to the wall member contacting end 234. The wall member contacting end 234 can be formed contiguous to the outer circumferential surface 221 of the wall member 219 and project outwardly therefrom. Alternately, the wall member contacting end 234 of each respective outwardly projecting arm 230 can be connected to the outer circumferential surface 221 of the wall member 219 by any suitable means. The outwardly projecting arms can have any suitable configuration. In the embodiment depicted, one or more of the outwardly projecting arms 230 can be elongated planar members with at least one aperture 232 defined thereon. In certain embodiments, each outwardly projecting arm 230 can include a plurality of apertures 232 defined thereon.

In the embodiment depicted in Fig. 13, the wall member contact end 234 of each respective outwardly projecting arm 230 is connected to the wall member 219 at a location proximate to the outlet end 217. Each outwardly projecting arm 230 can have at least one curved region. The outwardly projecting arm can be curves such that the distal end 236 of the associated outwardly projecting 230 is in flared relation relative to the wall member 219. It is contemplated that one or more outwardly projecting arms 230 arm be curved to correspond to the contours of the body 15 of the corresponding the centrifugal compressor wheel member 16. In the embodiment depicted in Fig. 13, the outwardly projecting arms 230, each include a plurality of apertures 232 that are located distal to the wall member 219.

It is also within the purview of this disclosure that the outwardly projecting arms 230 be perpendicular to the tubular insert 212 as depicted in Fig. 14. In the embodiment depicted, the outwardly projecting arms 230 are positioned intermediate to between the outlet end 217 and the inlet end 218 at a location which conforms with the contours of the body 15 of the centrifugal wheel member 16. The outwardly projecting arms 230 can project axially outward from the body 219 of tubular insert 212 coplanar to one another. In certain embodiments, the perpendicularly projecting arms 230 can be positioned on the body 219 at a location between the midpoint and the inlet end 218. In this embodiment, the apertures are in spaced relationship along the length of the elongated body.

While the disclosure has been described in connection with certain embodiments, it is to be understood that the disclosure is not to be limited to the disclosed embodiments but, on the contrary, is intended to cover various modifications and equivalent arrangements included within the scope of the appended claims, which scope is to be accorded the broadest interpretation so as to encompass all such modifications and equivalent structures as is permitted under the law.

## Claims

1. A compressor wheel assembly comprising:
a metal tubular insert having a shaft bore extending from an inlet end to an outlet end opposed to the inlet end, and a wall member, the wall member having an outer circumferential surface and an inner circumferential surface opposed to the outer circumferential surface defining the tubular insert shaft bore, wherein the at least one of the outer circumferential surface or inner circumferential surface includes at least one engagement member defined thereon;
a compressor wheel member composed of a polymeric material, the compressor wheel having an axially extending center portion molded on to the tubular insert, the center portion having an inlet end and an outlet end opposed to the inlet end, the compressor wheel member further having a blade array projecting outward from the center portion, the blade array having an outer surface and an inner region and a plurality of circumferentially-spaced, radially and axially extending blades disposed thereon; and
a shaft having an outer surface, the shaft extending through the tubular insert wherein the at least one contoured surface region on the opposed inner surface of the tubular insert engages the outer surface of the shaft.

2. The compressor wheel assembly of claim 1 wherein the polymeric material of the compressor wheel member comprises at least one of epoxy compounds, phenolic polymers, polyimide polymers, polyamide polymers, polypropylene polymers, or polyether ether ketone polymers.

3. The compressor wheel assembly of claim 2 wherein the polymeric material further comprises a reinforcement material, the reinforcement material comprising at least one of metal fibers, glass fibers, carbon fibers, metal particles, glass particles, carbon particles.

4. The compressor wheel assembly of claim 1 wherein the metal of the tubular insert comprises at least one of bronze, leaded bronze, copper iron, iron, leaded iron, aluminum, titanium, steel.

5. The compressor wheel assembly of claim 4 wherein the tubular insert comprises at least two engagement members tangentially disposed on and projecting axially outward from the outer circumferential surface of the tubular insert, and wherein the at least two engagement members project into and are surrounded by the polymeric material present in the center portion of the compressor wheel member.

6. The compressor wheel assembly of claim 5 wherein the at least two engagement members each extend from the inlet end to the outlet end of the tubular insert, each of the at least two engagement members having a torque transfer face.

7. The compressor wheel assembly of claim 5 wherein the inner circumferential surface of the tubular insert has a non-circular cross section.

8. The compressor wheel assembly of claim 1 wherein the center portion of the compressor wheel has a compressor wheel inlet end and an opposed compressor wheel outlet end having a length wherein the length of the center portion of the compressor wheel is less than or equal to a length defined by the tubular insert.

9. The compressor wheel assembly of claim 1 wherein the at least one engagement member of the tubular insert includes a plurality of apertures defined in the wall member of the tubular insert, the apertures extending from the outer circumferential surface to the inner circumferential surface, wherein the polymeric material of the compressor member extends through the plurality of apertures and overlays at least a portion of the inner circumferential surface.

10. The compressor wheel assembly of claim 9 wherein the polymeric material overlaying at least a portion of the inner circumferential surface defines a central bore coaxially disposed interior to the inner circumferential surface of the tubular insert, wherein the contoured surface region of the opposed inner surface of the tubular insert is in abutting contact with the outer surface of the shaft.

11. The compressor wheel assembly of claim 1 wherein the tubular insert is composed of at least one of bronze, leaded bronze, copper iron, iron, leaded iron, aluminum, titanium, steel and wherein the tubular insert comprises at least two engagement members tangentially disposed on and projecting axially outward from the outer circumferential surface of the tubular insert, the at least two engagement members projecting into and surrounded by the polymeric material of the center portion of the compressor wheel member and wherein the polymeric material of the compressor wheel member comprises at least one of epoxy resin, phenolic polymers, polyimide polymers, polyamide polymers, polypropylene polymers, polyether ether ketone polymers.

12. The compressor wheel assembly of claim 11 wherein the at least two engagement members of the tubular insert are configured as arcuate members defining a continuous spiroid configured relative to the rotational direction of the compressor wheel assembly when in the use position.

13. A compressor wheel assembly comprising:
a metal tubular insert having a shaft bore extending from an inlet end to an outlet end opposed to the inlet end, and a wall member, the wall member having an outer circumferential surface and an inner circumferential surface opposed to the outer circumferential surface defining the tubular insert shaft bore, wherein at least one of the outer circumferential surface or inner circumferential surface defines at least one engagement member defined thereon, wherein the metal of the tubular insert comprises at least one of bronze, leaded bronze, copper iron, iron, leaded iron, aluminum, titanium, steel;
a compressor wheel member composed of a polymeric material, the compressor wheel having an axially extending center portion molded on to the tubular insert, the center portion having an inlet end and an outlet end, the compressor wheel member further having a blade array projecting outward from the center portion, the blade array having an outer surface and an inner region and a plurality of circumferentially-spaced, radially and axially extending blades disposed thereon, wherein the polymeric material of the compressor wheel member comprises at least one of epoxy compounds, phenolic polymers, polyimide polymers, polyamide polymers, polypropylene polymers, or polyether ether ketone polymers and the polymeric material optionally contains at least one of metal fibers, glass fibers, carbon fibers, metal particles, glass particles, carbon particles, wherein the center portion of the compressor wheel has a compressor wheel inlet end and an opposed compressor wheel outlet end having a length wherein the length of the center portion of the compressor wheel is less than or equal to a length defined by the tubular insert; and
a shaft having an outer surface, the shaft extending through the tubular insert wherein the at least one contoured surface region on the opposed inner surface of the tubular insert engages the outer surface of the shaft.

14. The compressor wheel assembly of claim 13 tubular insert comprises at least two engagement members tangentially disposed on and projecting axially outward from the outer circumferential surface of the tubular insert, the at least two engagement members projecting into and surrounded by the polymeric material of the center portion of the compressor wheel member, the at least two engagement members each extending from the inlet end to the outlet end of the tubular insert and defining a torque engagement face and wherein the inner circumferential surface of the at least two engagement members has a non-circular cross section.

15. The compressor wheel assembly of claim 14 wherein the at least one engagement member of the tubular insert includes a plurality of apertures defined in the wall member of the tubular insert, the apertures extending from the outer circumferential surface to the inner circumferential surface, wherein the polymeric material of the compressor member extends through the plurality of apertures and overlays at least a portion of the inner circumferential surface and wherein the polymeric material overlaying at least a portion of the inner circumferential surface defines a central bore coaxially disposed interior to the inner circumferential surface of the tubular insert, wherein the contoured surface region of the opposed inner surface of the tubular insert is in abutting contact with the outer surface of the shaft.
